# EUROPEAN PATENT APPLICATION

(11) **EP 3 441 258 A1**
(43) Date of publication of application: **13.02.2019**
(21) Application number: 17185249.4
(22) Date of filing: 08.08.2017
(51) Int. Cl.: B60N 2/70, C08F 2/00, B29C 35/04, B29C 70/26, B29C 65/00, D04H 3/08

(54) **METHODS AND DEVICES FOR ATTACHING A FINISHING ELEMENT TO A FIBER CUSHION, AND RESULTING FIBER CUSHION**

(71) Applicant: Schukra Gerätebau GmbH, 2560 Berndorf (AT)
(72) Inventor: KÖNCZÖL, Georg, 1220 Wien (AT); KRISTO, Darko, 2540 Bad Vöslau (AT); SEEN, Gunnar, 1100 Wien (AT)
(74) Representative: Banzer, Hans-Jörg

(57) **Abstract**

Methods (10a - 10d) and devices (20) for attaching a finishing element (31a - 31 d) to a fiber cushion (30, 30a) are provided. The fiber cushion (30a) is formed from a loose fiber material. A method (10a - 10d) comprises arranging (11) the finishing element (31a - 31 d) on or in the fiber cushion (30, 30a); and integrating (12) the finishing element (31a - 31 d) with the fiber cushion (30, 30a).

## Description

### FIELD OF THE INVENTION

The invention relates to methods and devices for attaching a finishing element to a fiber cushion, and to a fiber cushion produced by such methods. Various embodiment relate in particular to methods and devices for attaching a finishing element to such fiber cushions which are formed from a loose fiber material.

### BACKGROUND OF THE INVENTION

Foams, such as polyurethane (PU) foams, are widely used as fabric backings for seats, such as for vehicle interior materials in the transportation industry. The foams are adhered to the backs of textile face materials. These foam backed composites have a cushion effect which can offer comfort or a luxurious feel in contact areas.

There are drawbacks to using polyurethane foam as cushioning material for seats. For example, the polyurethane foam backed material can emit volatile materials which contribute to 'fogging' of vehicle or housing interiors, and the foam itself may oxidize over time leading to a color change and material degradation / loss of properties in the material. Recyclability is also an issue which has to be addressed.

In this context, one class of materials which has received attention is nonwovens, for example synthetic fiber nonwovens (e.g. polyester, polyamide, polyolefin) These materials can provide a suitable backing to many face fabrics and provides cushion properties similar to the ones of foam mate-rials at similar costs. For example, EP 2 417 876 discloses fiber cushions comprising heat-treated nonwovens, in particular a seat cushion body and a method of producing said seat cushion body. The fiber cushion is formed from a loose fiber material.

However, a pre-integration of finishing elements, such as cover, support or suspension systems, within the mold of a fiber cushion, as in the case of foam cushions by way of insert molding, is impeded by the specific method of producing said fiber cushion, which entails turbulances behind every undercut of the air stream passing through the mold. This would result in spatial zones having lower or different fiber densities, holes, or inhomogeneities.

At the same time, post-processing methods for foam cushions are not generally applicable to fiber cushions either, as foam cushions and fiber cushions have quite different material properties which need to be taken account of in order to obtain shaped fiber cushions of satisfactory quality and quantity.

### BRIEF SUMMARY OF THE INVENTION

In view of the above, there is a continued need in the art for methods and devices which address some of the above needs. There is in particular a need in the art for methods and devices which provide similar integration capabilities for fiber cushions as in the case of conventional foam cushions.

These underlying objects of the invention are each solved by a method and a device for attaching a finishing element to a fiber cushion, as defined by the independent claims. Preferred embodiments of the invention are set forth in the dependent claims.

According to a first aspect, a method for attaching a finishing element to a fiber cushion is provided. The fiber cushion is formed from a loose fiber material. The method comprises arranging the finishing element on or in the fiber cushion; and integrating the finishing element with the fiber cushion.

The term "finishing element" as used herein refers to any element which, when integrated with the fiber cushion, may result in a value-add for the manufacturer of the resulting processed fiber cushion, as coverage of the value chain is extended. In particular, finishing elements may comprise cover fixing systems, support systems or suspension systems, or parts thereof.

Advantageously, the method enables integration of such finishing elements into a fiber cushion which would result in undercuts if respective arrangements for integration of the same would be made within the mold of the fiber cushion.

According to an embodiment, integrating the finishing element with the fiber cushion comprises thermally cross-linking the finishing element and the fiber cushion.

Advantageously, after thermally cross-linking the finishing element and the fiber cushion, an external force introduced is diverted via a dense network of fibers, resulting in a much larger volume of the fiber cushion participating in diversion of the external force as in the case of cellularly structured foam cushions. In particular, the integrated finishing elements are more difficult to separate from the cushion, the integration in more durable and maintains its properties for longer periods as in the case of foam cushions.

Advantageously, any nonwoven layers used to improve force diversion of conventional foam cushions may be eliminated, because the fiber cushion already has the desired properties. In particular, this may result in savings in space requirements on the end product, in manufacturing logistics as well as in expenses - owing to less parts and less process steps.

According to an embodiment, arranging the finishing element on or in the fiber cushion comprises arranging the finishing element at a fill level within the mold of the fiber cushion.

The term "fill level" as used herein refers to any vertical position in the mold at which there is no fiber material above and no clearance underneath, because the fiber material piles up to this vertical position. This also comprises all such vertical positions within the mold at which a recess in a vertical mold wall is arranged to receive said finishing element, such that there is no fiber material above and no clearance underneath the finishing element, because the finishing element is seamlessly integrated in the vertical mold wall.

Advantageously, arranging the finishing element at a fill level within the mold prevents formation of undercuts, resulting in homogeneous fiber cushion characteristics.

Advantageously, integrating the finishing element within the fiber cushion may reduce a space requirement of such finishing elements which would otherwise be fixed to a surface of the fiber cushion.

According to an embodiment, arranging the finishing element on or in the fiber cushion comprises triggering arranging the finishing element at a fill level from outside of the mold of the fiber cushion.

According to an embodiment, arranging the finishing element at a fill level further comprises arranging the finishing element by means of a pivotal movement.

According to an embodiment, arranging the finishing element at a fill level further comprises arranging the finishing element by means of a translatory movement.

Advantageously, triggering the finishing element at a fill level from outside of the mold of the fiber cushion enables automation of the manufacture of fiber cushions having integrated finishing elements.

According to an embodiment, arranging the finishing element at a fill level further comprises retaining the finishing element by means of magnetic force.

Advantageously, retaining the finishing element by means of magnetic force also facilitates automation of the manufacture of fiber cushions having integrated finishing elements, and enables integration of such finishing elements which extend within the mold only.

According to an embodiment, arranging the finishing element on or in the fiber cushion and integrating the finishing element with the fiber cushion comprise heating up the finishing element and guiding at least a section of the heated finishing element through the fiber cushion to a target position of the finishing element in the fiber cushion.

Advantageously, a heated finishing element may easily be passed through the fiber cushion and, at the same time, re-seal its passage through the fiber cushion and thermally cross-link with the fiber cushion.

According to an embodiment, heating up the finishing element comprises an energy supply method selected from the group consisting of electric, magnetic, radiant or convective energy supply.

According to an embodiment, the finishing element comprises a metallic wire, a metallic spring or a strip of a hook-and-loop fastener having either hooks or loops.

Advantageously, integrating metallic springs with the fiber cushion may significantly influence or further improve fiber cushions in terms of comfort, suspension and damping characteristics. In particular, integrating metallic springs with the fiber cushion may enable providing different hardness / comfort zones, and/or improve damping behavior by combining low-frequency attenuation of fiber cushions and high-frequency attenuation of springs.

In particular, strips of hook-and-loop fasteners may be arranged in a corresponding recess of a vertical mold wall before filling fiber material into the mold. Preferably, such a strip comprises a perforation corresponding to a perforation of the vertical mold wall, such that the vertical mold wall remains permeable to air. Preferably, the strip is integrated with the fiber cushion by thermal cross-linking.

Advantageously, owing to the superior force diversion capability of fiber cushions with respect to cellular foam cushions, hook-and-loop fasteners require less contact surface to withstand a same external force, or withstand a larger external force at a same contact surface.

Advantageously, the fiber cushion maintains its existing advantages over foam cushions, such as weight reduction, improved breathability, improved fire behavior, lower toxic emission, improved damping behavior, improved durability, and significantly less or virtually no ageing.

According to an embodiment, arranging the finishing element on or in the fiber cushion comprises arranging the finishing element on a surface of the fiber cushion, and integrating the finishing element with the fiber cushion comprises welding the finishing element onto the surface of the fiber cushion.

Advantageously, welding the finishing element directly onto the fiber cushion simplifies the resulting fiber cushion as well as a final product based thereon, e.g. a seating system.

According to an embodiment, welding the finishing element onto the surface of the fiber cushion comprises a welding method selected from the group consisting of ultrasonic, laser, high-frequency or infrared welding.

According to an embodiment, the finishing element comprises a pneumatic actuator (i.e., pneumatic bolster, or pneumatic lumbar support) or a strip of a hook-and-loop fastener having either hooks or loops.

Advantageously, if pneumatic actuators are used frequently, such as massage systems, a use of fiber cushions may prevent a partial damage of a (foam) cushion due to wear.

In particular, strips of hook-and-loop fasteners may be arranged on a surface of the fiber cushion and integrated by welding the finishing element onto the surface of the fiber cushion.

Advantageously, owing to the superior force diversion capability of a fiber cushion with respect to cellular foam cushions, hook-and-loop fasteners require less contact surface to withstand a same external force, or withstand a larger external force at a same contact surface.

According to an embodiment, arranging the finishing element on the fiber cushion and integrating the finishing element with the fiber cushion comprise providing an adhesive to a respective contact surface of the finishing element and/or the fiber cushion, and arranging the finishing element on the contact surface of the fiber cushion.

According to an embodiment, the finishing element comprises a pocket spring unit or a strip of a hook-and-loop fastener having either hooks or loops.

The term "pocket spring unit" as used herein refers to any sheet of fabric envelope enclosing and comprising a spring unit, e.g. a coil spring.

In particular, strips of hook-and-loop fasteners may be provided with an adhesive on a backside of the strip and arranged on the surface of the fiber cushion.

Advantageously, owing to the superior force diversion capability of a fiber cushion with respect to cellular foam cushions, hook-and-loop fasteners require less contact surface to withstand a same external force, or withstand a larger external force at a same contact surface.

According to a second aspect, a fiber cushion produced by a method for attaching a finishing element to a fiber cushion according to various embodiments is provided.

According to a third aspect, a device for attaching a finishing element to a fiber cushion is provided. The fiber cushion is formed from a loose fiber material. The device comprises an arranging means configured to arrange the finishing element on or in the fiber cushion; and an integrating means configured to integrate the finishing element with the fiber cushion.

According to an embodiment, the device is configured to perform a method for attaching a finishing element to a fiber cushion according to various embodiments.

Advantageously, the technical effects and advantages described above in relation with the method for attaching a finishing element to a fiber cushion equally apply to the device for attaching a finishing element to a fiber cushion having corresponding features.

### BRIEF DESCRIPTION OF THE DRAWINGS

Embodiments of the invention will be described with reference to the accompanying drawings, in which the same or similar reference numerals designate the same or similar elements.
Figs. 1 - 3 are flow diagrams illustrating a method for attaching a finishing element to a fiber cushion according to various embodiments.
Figs. 4 - 6 are flow diagrams illustrating another method for attaching a finishing element to a fiber cushion according to various embodiments.
Figs. 7 - 9 are flow diagrams illustrating a further method for attaching a finishing element to a fiber cushion according to various embodiments.
Figs. 10 - 11 are flow diagrams illustrating an additional method for attaching a finishing element to a fiber cushion according to various embodiments.
Fig. 12 is a schematic block diagram illustrating a device for attaching a finishing element to a fiber cushion according to an embodiment.
Figs. 13 - 14 are schematic cross-sectional diagrams illustrating devices for attaching a finishing element to a fiber cushion according to various embodiments.
Figs. 15 - 16 are schematic diagrams of a fiber cushion produced by the method for attaching a finishing element to a fiber cushion according to an embodiment.
Figs. 17 - 18 are schematic diagrams of another fiber cushion produced by the another method for attaching a finishing element to a fiber cushion according to an embodiment.
Fig. 19 is a schematic diagram of a further fiber cushion produced by the further method for attaching a finishing element to a fiber cushion according to an embodiment.
Figs. 20 - 21 are schematic diagrams of an additional fiber cushion produced by the additional method for attaching a finishing element to a fiber cushion according to an embodiment.
Figs. 22 - 25 are schematic diagrams of fiber cushions produced by an alternative method for attaching a finishing element to a fiber cushion.

### DETAILED DESCRIPTION OF THE EMBODIMENTS

Exemplary embodiments of the invention will now be described with reference to the drawings. While some embodiments will be described in the context of specific fields of application, the embodiments are not limited to this field of application. Further, the features of the various embodiments may be combined with each other unless specifically stated otherwise.

The drawings are to be regarded as being schematic representations and elements illustrated in the drawings are not necessarily shown to scale. Rather, the various elements are represented such that their function and general purpose become apparent to a person skilled in the art.

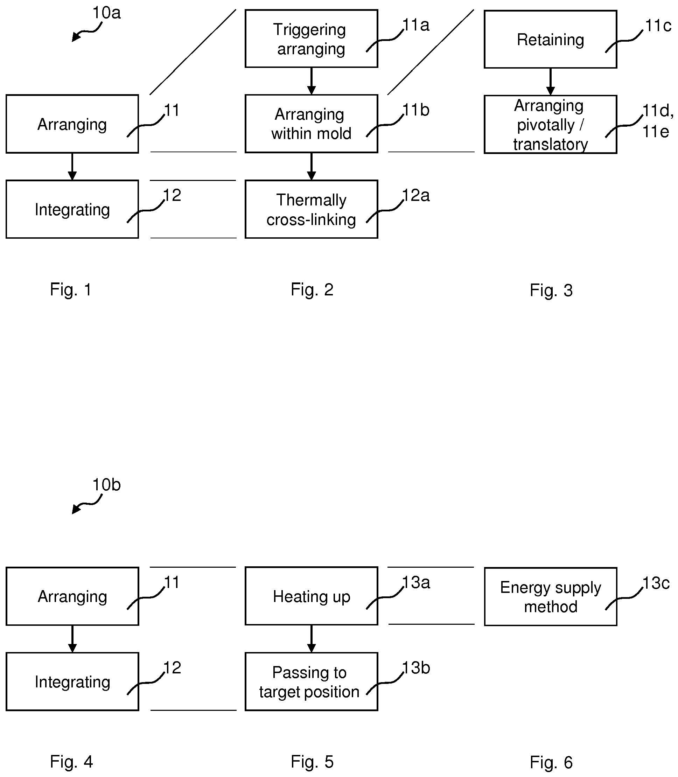

From Figs. 2 - 3, 5 - 6, 8 - 9 and 11, pairs of lines extend towards the respective preceding figure indicating that the method step(s) framed by the pair of lines in the preceding figure may comprise the method step(s) framed by the pair of lines in the succeding figure. For example, The "integrating" step 12 in Fig. 1 may comprise the "thermally cross-linking" step 12a in Fig. 2.

In all figures and their following description, it is distinguished between unprocessed fiber cushions 30a and processed fiber cushions 30.

Unprocessed fiber cushions 30a are produced by filling loose fiber material into a mold and supplying heat to the fiber material within the mold, and have no finishing elements 31a - 31 d attached to them.

Processed fiber cushions 30 are produced by a method 10a - 10d for attaching a finishing element 31a - 31 d to either of an unprocessed fiber cushion 30a or an already post-processed fiber cushion 30. It should be noted that each of methods 10b - 10d for attaching a finishing element 31 b - 31 d may be applied just as much to unprocessed fiber cushions 30a as well as to processed fiber cushions 30.

Figs. 1 - 3 are flow diagrams illustrating a method 10a for attaching a finishing element 31 a to a fiber cushion 30a according to various embodiments.

The method 10a is particularly suitable if the fiber cushion 30a is formed from a loose fiber material, and if a finishing element 31a comprising a metallic wire or metallic bar is to be attached to the fiber cushion 30a.

Fig. 1 shows the method 10a comprising, in a first step, arranging 11 the finishing element 31 a in the fiber cushion 30a; and in a second step, integrating 12 the finishing element 31 a with the fiber cushion 30a, resulting in a fiber cushion 30.

With reference to Fig. 2, it will be appreciated that integrating 12 the finishing element 31 a with the fiber cushion 30a comprises thermally cross-linking 12a the finishing element 31 a and the fiber cushion 30a.

With continuing reference to Fig. 2, it will also be appreciated that arranging 11 the finishing element 31 a on or in the fiber cushion 30a comprises arranging 11 b the finishing element 31 a at a fill level within the mold of the fiber cushion 30a.

Also shown in Fig. 2 is that arranging 11 the finishing element 31 a on or in the fiber cushion 30a comprises triggering 11 a arranging the finishing element 31 a at a fill level from outside of the mold of the fiber cushion 30a.

As can be taken from Fig. 3, arranging 11 b the finishing element 31 a at a fill level further comprises arranging 11 d, 11 e the finishing element 31 a by means of a pivotal movement or a translatory movement.

Also shown in Fig. 3 is that arranging 11 b the finishing element 31 a at a fill level further comprises retaining 11 c the finishing element 31 a by means of magnetic force.

Figs. 4 - 6 are flow diagrams illustrating another method 10b for attaching a finishing element 31 b to a fiber cushion 30, 30a according to various embodiments.

The method 10b is particularly suitable if the fiber cushion 30a is formed from a loose fiber material, and if a finishing element 31 a; 31 b comprising a metallic wire or a metallic spring is to be attached to the fiber cushion 30, 30a.

Fig. 4 shows the method 10b comprising, in a first step, arranging 11 the finishing element 31 a; 31 b in the fiber cushion 30, 30a; and in a second step, integrating 12 the finishing element 31 a; 31 b with the fiber cushion 30, 30a.

Making reference to Fig. 5, it is shown that the steps of arranging 11 the finishing element 31 a; 31 b in the fiber cushion 30, 30a and integrating 12 the finishing element 31 a; 31 b with the fiber cushion 30, 30a comprise heating up 13a the finishing element 31 a; 31 b and guiding 13b at least a section of the heated finishing element 31 a; 31 b through the fiber cushion 30, 30a to a target position of the finishing element 31 a; 31 b in the fiber cushion 30, 30a.

As indicated in Fig. 6, heating up 13a the finishing element 31 a; 31 b comprises an energy supply method 13c selected from the group consisting of electric, magnetic, radiant or convective energy supply.

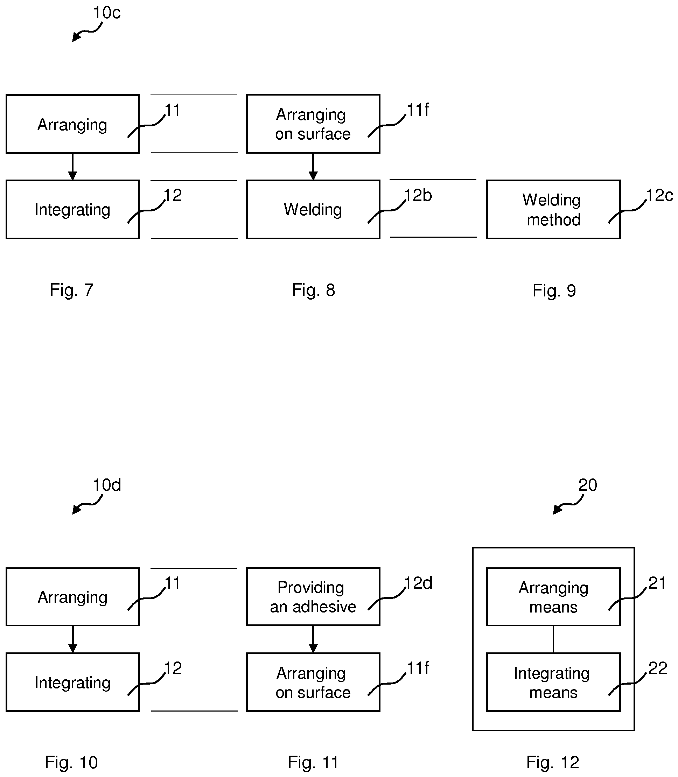

Figs. 7 - 9 are flow diagrams illustrating a further method 10c for attaching a finishing element 31 c to a fiber cushion 30, 30a according to various embodiments.

The method 10c is particularly suitable if the fiber cushion 30a is formed from a loose fiber material, and if a finishing element 31 c comprising a pneumatic actuator or a hook-and-loop fastener is to be attached to the fiber cushion 30, 30a.

Fig. 7 shows the method 10c comprising, in a first step, arranging 11 the finishing element 31 c on the fiber cushion 30, 30a; and in a second step, integrating 12 the finishing element 31 c with the fiber cushion 30, 30a.

Making reference to Fig. 8, it is shown that arranging 11 the finishing element 31 c on the fiber cushion 30, 30a comprises arranging 11f the finishing element 31c on a surface of the fiber cushion 30, 30a, and that integrating 12 the finishing element 31 c with the fiber cushion 30, 30a comprises welding 12b the finishing element 31 c onto the surface of the fiber cushion 30, 30a.

As indicated in Fig. 9, welding 12b the finishing element 31 c onto the surface of the fiber cushion 30, 30a comprises a welding method 12c selected from the group consisting of ultrasonic, laser, high-frequency or infrared welding.

Figs. 10 - 11 are flow diagrams illustrating an additional method 10d for attaching a finishing element 31 d to a fiber cushion 30, 30a according to various embodiments.

The method 10d is particularly suitable if the fiber cushion 30a is formed from a loose fiber material, and if a finishing element 31d comprising a pocket spring unit is to be attached to the fiber cushion 30, 30a.

Fig. 10 shows the method 10d comprising, in a first step, arranging 11 the finishing element 31d on the fiber cushion 30, 30a; and in a second step, integrating 12 the finishing element 31 d with the fiber cushion 30, 30a.

With reference to Fig. 11, it will be appreciated that arranging 11 the finishing element 31d on the fiber cushion 30, 30a and integrating 12 the finishing element 31d with the fiber cushion 30, 30a comprise providing an adhesive 12d to a respective contact surface of the finishing element 31d and/or the fiber cushion 30, 30a, and arranging 11f the finishing element 31d on the contact surface of the fiber cushion 30, 30a.

Fig. 12 is a schematic block diagram illustrating a device 20 for attaching a finishing element 31 a - 31 d to a fiber cushion 30, 30a according to an embodiment.

The device 20 is particularly suitable if the fiber cushion 30a is formed from a loose fiber material.

Fig. 12 shows the device 20 comprising an arranging means 21 configured to arrange 11 the finishing element 31 a - 31 d on or in the fiber cushion 30, 30a; and an integrating means 22 configured to integrate 12 the finishing element 31a - 31 d with the fiber cushion 30, 30a. The device 20 is configured to perform a method 10a - 10d for attaching a finishing element 31a - 31 d to a fiber cushion 30a according to various above-identified embodiments.

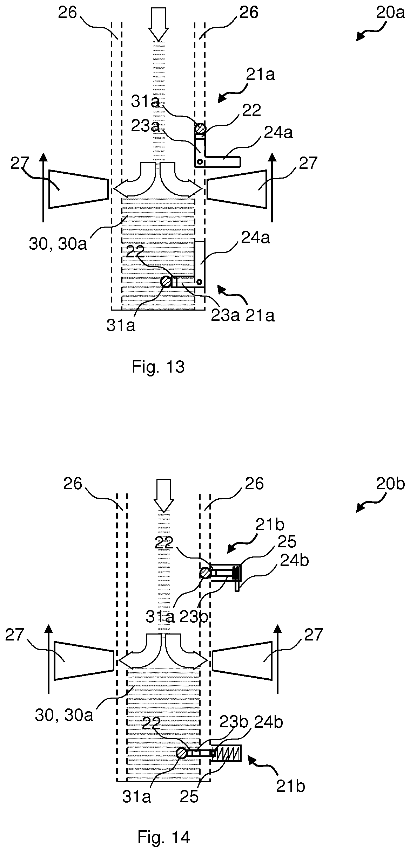

Figs. 13 - 14 are schematic cross-sectional diagrams illustrating devices 20a; 20b for attaching a finishing element 31 a to a fiber cushion 30, 30a according to various embodiments.

With reference to Figs. 13 - 14, it is shown that the respective arranging means 21 a; 21 b of device 20a; 20b is integrated in a mold wall 26 of the mold used to produce the fiber cushion 30a, and is configured to arrange 11 b the finishing element 31 a at a fill level within the mold.

Making reference to Fig. 13, the arranging means 21 a of device 20a comprises projections 23a and 24a, respectively, both of which extend from a same pivotal point arranged in the mold wall 26, and forming a substantially perpendicular angle with one another.

The arranging means 21 a further comprises a retaining means 22 configured to retain 11 c the finishing element 31 a by means of magnetic force. The retaining means 22 is arranged, with respect to the pivotal point, at a remote end of projection 23a.

The arranging means 21 a is further configured to arrange 11 d the finishing element 31 a within the mold by means of a pivotal movement around the pivotal point, from an initial position to a triggered position.

In the initial position, the arranging means 21 a is arranged such that the finishing element 31 a is located in a recess of the mold wall 26, and such that the projection 24a projects substantially perpendicular from the mold wall 26, so that the projection 24a can be driven in an ascending vertical direction. The projection 24a disables the pivotal movement of the arranging means 21 a around the pivotal point owing to its gravitational force.

In the triggered position, the arranging means 21 a is arranged such that the finishing element 31 a is located at its target position within the mold.

The pivotal movement is triggered from outside of the mold. As shown in Fig. 13, the trigger may come from a suction device 27 which sweeps the mold wall 26 from a lower end to an upper end of the mold wall 26, as indicated by thin arrows. The suction device 27 imparts a preferential direction to the fiber material which is introduced to the mold, as indicated by block arrows, and becomes deposited at the fill level of the mold. As such, the suction device 27 is configured to mechanically trigger 11 a arranging the finishing element 31 a at the fill level from outside of the mold of the fiber cushion 30a. In particular, arranging the finishing element 31 a at the fill level is triggered if the suction device 27 lifts the projection 24a of the arranging means 21 a.

Making reference to Fig. 14, the arranging means 21 b of device 20b comprises projections 23b and 24b, respectively, which form a substantially perpendicular angle with one another. The arranging means 21 b is mounted, via a spring mechanism 25, at the mold wall 26 and is arranged such that the projection 23b is substantially perpendicular to the mold wall 26.

The arranging means 21 b further comprises a retaining means 22 configured to retain 11 c the finishing element 31 a by means of magnetic force. The retaining means 22 is arranged, with respect to the projection 24b, at a remote end of projection 23b.

The arranging means 21 b is further configured to arrange 11 e the finishing element 31 a within the mold by means of a translatory movement along a longitudinal axis of projection 23b, from an initial position to a triggered position.

In the initial position, the arranging means 21 b is arranged such that the finishing element 31 a is located in a recess of the mold wall 26, and such that the projection 24b projects substantially horizontally from the projection 23b, so that the projection 24b can be driven in an ascending vertical direction. The spring mechanism 25 biases the arranging means 21 b in a direction towards a target position of the finishing element 31 a within the mold, but the substantially horizontal extension of projection 24b disables the translatory movement of the arranging means 21 b along the longitudinal axis of projection 23b mechanically.

In the triggered position, the arranging means 21 b is arranged such that the finishing element 31 a is located at its target position within the mold.

The translatory movement is triggered from outside of the mold. As indicated in Fig. 14, the trigger may again originate from the suction device 27. Due to its operating principle, the suction device 27 is configured to mechanically trigger 11 a arranging the finishing element 31 a at the fill level from outside of the mold of the fiber cushion 30a. In particular, arranging the finishing element 31 a at the fill level is triggered if the suction device 27 lifts the projection 24b of the arranging means 21 b such that projection 24b pivots to a position in which it is able to give in to the bias of the spring mechanism 25 and to enable the translatory movement of the arranging means 21 b along the longitudinal axis of projection 23b.

Both devices 20a; 20b shown in Figs. 13 - 14 comprise an integrating means 22 (not shown) which may, for example, pass hot air through the fiber material introduced in the mold to integrate 12 the finishing element 31 a with the fiber cushion 30a, resulting in a fiber cushion 30.

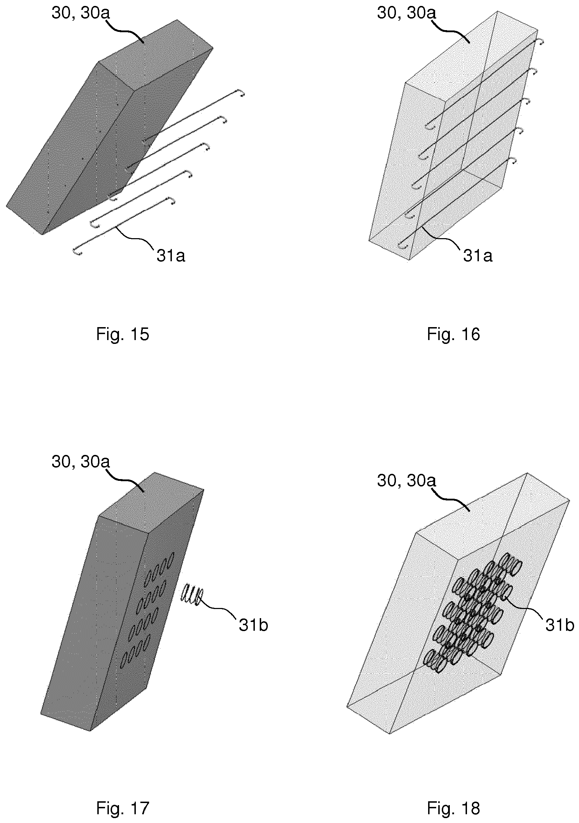

Figs. 15 - 16 are schematic diagrams of a fiber cushion 30 produced by the method 10a for attaching a finishing element 31 a to a fiber cushion 30, 30a according to an embodiment.

Fig. 15 shows a fiber cushion 30, 30a and a number of metallic wires as finishing elements 31 a. Furthermore, target positions of the metallic wires 31 a in the fiber cushion 30, 30a are indicated.

The fiber cushion 30 is produced by heating up 13a the metallic wires 31 a and by guiding 13b most of the heated metallic wires 31 a transversely through the fiber cushion 30, 30a to the respective target positions of the metallic wires 31 a in the fiber cushion 30, 30a.

As shown in Fig. 16, the resulting fiber cushion 30 comprises the metallic wires 31 a, which are thermally cross-linked with the fiber cushion 30.

Figs. 17 - 18 are schematic diagrams of another fiber cushion 30 produced by the another method 10b for attaching a finishing element 31 b to a fiber cushion 30, 30a according to an embodiment.

Fig. 17 shows a fiber cushion 30, 30a and a number of metallic springs as finishing elements 31 b. Also indicated are target positions of the metallic springs in the fiber cushion 30, 30a.

The fiber cushion 30 is produced by heating up 13a the metallic springs 31 b and by guiding 13b the heated metallic springs 31 b axially through the fiber cushion 30, 30a to the respective target position of the metallic springs 31 b in the fiber cushion 30, 30a. In the embodiment 30 shown in Fig. 18, the metallic springs 31 b are completely recessed within the fiber cushion 30, and a respective end of each of the metallic springs 31 b is aligned with the surface of the fiber cushion 30.

Fig. 18 indicates that the resulting fiber cushion 30 comprises the metallic springs 31 b, which are thermally cross-linked with the fiber cushion 30.

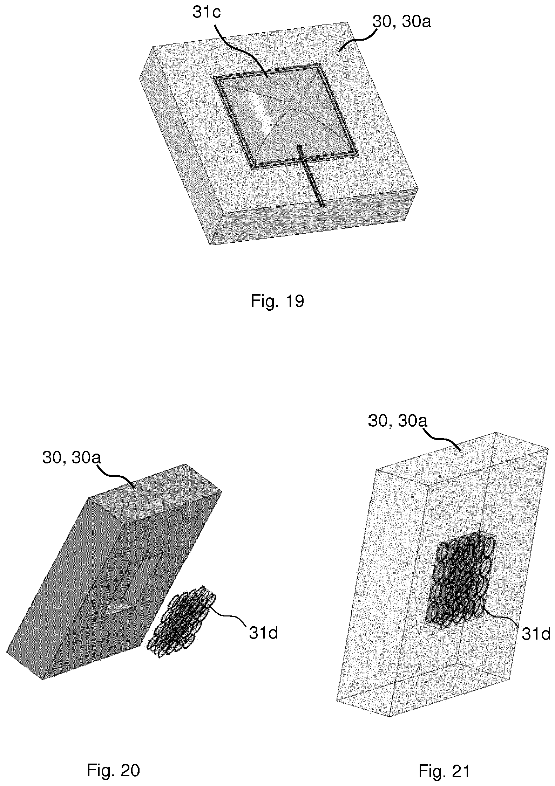

Fig. 19 is a schematic diagram of a further fiber cushion 30 produced by the further method 10c for attaching a finishing element 31 c to a fiber cushion 30, 30a according to an embodiment.

The fiber cushion 30 is produced by arranging 11f the finishing element 31c, a pneumatic actuator 31 c, on the surface of the fiber cushion 30, 30a, at a respective recess as appropriate, and directly welding 12b the pneumatic actuator 31 c around its circumference onto the surface of the fiber cushion 30, 30a. The pneumatic actuator 31 c of Fig. 19 is a pad which is inflatable via a tube extending from the pneumatic actuator 31 c and which is also suggested in Fig. 19. The resulting fiber cushion 30 comprises the pneumatic actuator 31 c which is thermally cross-linked with the fiber cushion 30.

Figs. 20 - 21 are schematic diagrams of an additional fiber cushion 30 produced by the additional method 10d for attaching a finishing element 31 d to a fiber cushion 30, 30a according to an embodiment.

Figs. 20 shows a fiber cushion 30, 30a having a recess on its surface which is large enough to accomodate the finishing elements 31 d, and pocket spring units as finishing elements 31 d, in particular as a pre-assembly of pocket spring units 31 d.

Respective contact surfaces of the finishing elements 31 d and/or the fiber cushion 30, 30a are provided with an adhesive 12d, and the finishing elements 31 d are arranged 11f on their corresponding contact surface in the recess of the fiber cushion 30, 30a.

Fig. 21 indicates that the resulting fiber cushion 30 comprises the pre-assembly of pocket spring units 31 d, which is adhesively bonded with the fiber cushion 30.

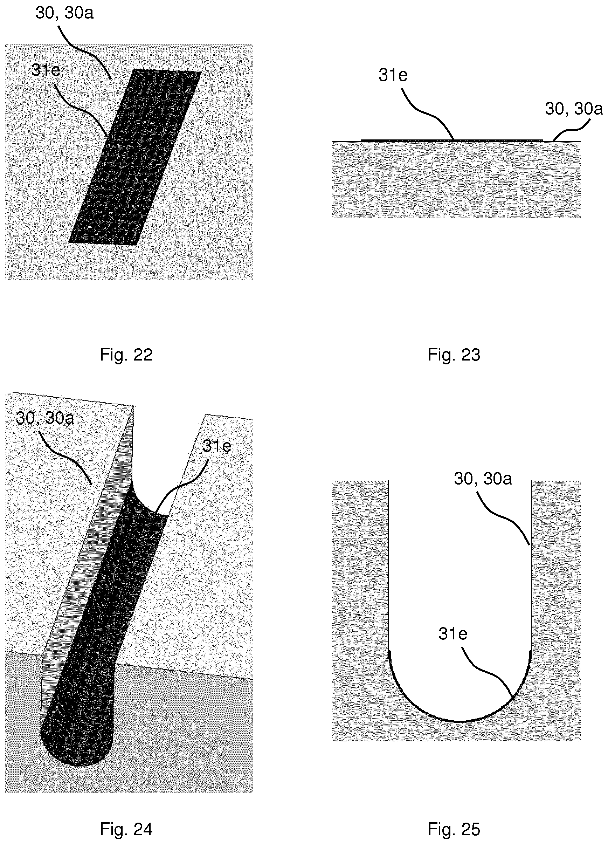

Figs. 22 - 25 schematically illustrate perspective and side views of fiber cushions 30 produced by an alternative method for attaching a finishing element 31e to a fiber cushion 30, 30a.

According to the alternative method, the fiber cushion 30 is produced by arranging the finishing element 31 e, a strip 31e of a hook-and-loop fastener having either hooks or loops, on the surface of the fiber cushion 30, 30a as shown in Figs. 22 and 23, optionally in a respective recess of the fiber cushion 30, 30a as appropriate as shown in Figs. 24 and 25, and integrating the strip 31 e with the fiber cushion 30, 30a.

Alternatively, the strip 31e may be arranged in a corresponding recess of a vertical mold wall before filling fiber material into the mold, such that it is arranged on the surface of the fiber cushion 30, 30a as shown in Figs. 22 - 25, respectively.

While methods and devices according to various embodiments as well as fiber cushions produced by methods according to various embodiments have been described, various modifications may be implemented in other embodiments.

For illustration, in the methods 10a - 10d for attaching a finishing element 31a - 31 d to a fiber cushion 30, 30a, the method steps may be performed in an automated manner by a controller means being configured to control the arranging means 21 of the device 20 and to control the integrating means 22.

## Claims

1. A method (10a - 10d) for attaching a finishing element (31 a - 31 d) to a fiber cushion (30, 30a), the fiber cushion (30, 30a) being formed from a loose fiber material, the method (10a - 10d) comprising
- arranging (11) the finishing element (31 a - 31 d) on or in the fiber cushion (30, 30a); and
- integrating (12) the finishing element (31a - 31 d) with the fiber cushion (30, 30a).

2. The method (10a; 10b; 10c) of claim 1,
wherein integrating (12) the finishing element (31 a; 31 b; 31 c) with the fiber cushion (30, 30a) comprises thermally cross-linking (12a) the finishing element (31 a; 31 b; 31 c) and the fiber cushion (30, 30a).

3. The method (10a) of claim 2,
wherein arranging (11) the finishing element (31 a) on or in the fiber cushion (30, 30a) comprises arranging (11 b) the finishing element (31 a) at a fill level within the mold of the fiber cushion (30, 30a).

4. The method (10a) of claim 3,
wherein arranging (11) the finishing element (31 a) on or in the fiber cushion (30, 30a) comprises triggering (11 a) arranging the finishing element (31 a) at a fill level from outside of the mold of the fiber cushion (30, 30a).

5. The method (10a) of claim 3 or claim 4,
wherein arranging (11 b) the finishing element (31 a) at a fill level further comprises arranging (11 d) the finishing element (31 a) by means of a pivotal movement.

6. The method (10a) of claim 3 or claim 4,
wherein arranging (11 b) the finishing element (31 a) at a fill level further comprises arranging (11 e) the finishing element (31 a) by means of a translatory movement.

7. The method (10a) of any one of claims 3 - 6,
wherein arranging (11 b) the finishing element (31 a) at a fill level further comprises retaining (11 c) the finishing element (31 a) by means of magnetic force.

8. The method (10b) of claim 1 or claim 2,
wherein arranging (11) the finishing element (31 b) on or in the fiber cushion (30, 30a) and integrating (12) the finishing element (31 b) with the fiber cushion (30, 30a) comprise heating up (13a) the finishing element (31 b) and guiding (13b) at least a section of the heated finishing element (31 b) through the fiber cushion (30, 30a) to a target position of the finishing element (31 b) in the fiber cushion (30, 30a).

9. The method (10b) of claim 8,
wherein heating up (13a) the finishing element (31 b) comprises an energy supply method (13c) selected from the group consisting of electric, magnetic, radiant or convective energy supply.

10. The method (10c) of claim 1 or claim 2,
wherein arranging (11) the finishing element (31 c) on or in the fiber cushion (30, 30a) comprises arranging (11f) the finishing element (31 c) on a surface of the fiber cushion (30, 30a), and
wherein integrating (12) the finishing element (31 c) with the fiber cushion (30, 30a) comprises welding (12b) the finishing element (31 c) onto the surface of the fiber cushion (30, 30a).

11. The method (10c) of claim 10,
wherein welding (12b) the finishing element (31 c) onto the surface of the fiber cushion (30, 30a) comprises a welding method (12c) selected from the group consisting of ultrasonic, laser, high-frequency or infrared welding.

12. The method (10d) of claim 1,
wherein arranging (11) the finishing element (31 d) on or in the fiber cushion (30, 30a) and integrating (12) the finishing element (31 d) with the fiber cushion (30, 30a) comprise providing (12d) an adhesive to a respective contact surface of the finishing element (31 d) and/or the fiber cushion (30, 30a), and arranging (11f) the finishing element (31 d) on the contact surface of the fiber cushion (30, 30a).

13. A fiber cushion (30) produced by a method (10a - 10d) for attaching a finishing element (31 a - 31 d) to a fiber cushion (30, 30a) of any one of claims 1 - 12.

14. A device (20) for attaching a finishing element (31 a - 31 d) to a fiber cushion (30, 30a), the fiber cushion (30, 30a) being formed from a loose fiber material, the device (20) comprising
- an arranging means (21) configured to arrange (11) the finishing element (31 a - 31 d) on or in the fiber cushion (30, 30a); and
- an integrating means (22) configured to integrate (12) the finishing element (31 a - 31 d) with the fiber cushion (30, 30a).

15. The device (20) of claim 14, wherein the device (20) is configured to perform a method (10a - 10d) for attaching a finishing element (31 a - 31 d) to a fiber cushion (30, 30a) of any one of claims 1 - 12.
